# DEMANDE DE BREVET EUROPEEN

(11) **EP 4 722 860 A1**
(43) Date de publication de la demande: **08.04.2026**
(21) Numéro de dépôt: 25206855.6
(22) Date de dépôt: 06.10.2025
(51) Int. Cl.: G06F 1/3293, G06F 1/3234

(54) **PROCEDE AMELIORE DE CONFIGURATION D'UN DISPOSITIF ELECTRONIQUE COMPRENANT UNE INTERFACE RADIO BASSE CONSOMMATION, DISPOSITIF ELECTRONIQUE, ET PRODUIT PROGRAMME D'ORDINATEUR**

(30) Priorité: 07.10.2024 FR 2410802
(71) Demandeur: SAGEMCOM BROADBAND SAS, 92270 Bois-Colombes (FR)
(72) Inventeur: KORBER, Nicolas, 92270 BOIS-COLOMBES (FR); MOUSSOUS, Farid, 92270 BOIS-COLOMBES (FR)
(74) Mandataire: Cabinet Le Guen Maillet

(57) **Abrégé**

L'invention concerne un dispositif électronique (1) configuré pour opérer des communications sans fil via une interface de communication basse consommation (RI 145) lorsque le dispositif électronique (1) opère dans un mode de veille profonde, ainsi qu'un procédé amélioré de configuration dudit dispositif électronique (1) pendant une veille profonde.

## Description

### DOMAINE TECHNIQUE

La présente invention concerne le domaine des dispositifs et équipements électroniques, notamment domestiques, tels que des passerelles de réseau de communication, par exemple, configurés pour pouvoir opérer selon des modes de fonctionnement à très faible niveau de consommation d'énergie. L'invention concerne plus précisément un procédé amélioré de configuration d'un tel dispositif ou équipement, opérant dans un mode de veille profonde, et comprenant une interface de communication sans fil à courte portée et faible consommation, laquelle interface permet d'opérer des modes de communication en configuration de veille profonde du dispositif ou de l'équipement électronique.

### ETAT DE LA TECHNIQUE ANTERIEURE

Des dispositifs électroniques comprennent plusieurs circuiteries électroniques qui sont alimentées chacune conditionnellement en énergie électrique en fonction de l'activation ou non d'une ou plusieurs fonctions à un instant donné. Par exemple, une interface de communication peut être rendue inactive, quand elle n'est pas utilisée. Il est ainsi possible de définir différents modes de fonctionnement entraînant différents niveaux de consommation d'énergie électrique. Afin de réduire substantiellement la consommation d'énergie électrique des appareils, et notamment des dispositifs électroniques domestiques, un mode dit de « veille profonde » est souvent défini comme étant le mode de fonctionnement selon lequel le dispositif concerné consomme le moins possible d'énergie électrique. Seule une circuiterie électronique minimale, entrainant une consommation d'énergie la plus faible possible, reste active dans un tel mode de veille profonde, afin de garantir un minimum d'interopérabilité avec un utilisateur ou avec des dispositifs tiers. Par exemple, un utilisateur d'un dispositif électronique, doit pouvoir « réveiller » celui-ci lorsqu'il est configuré en veille profonde, par pression sur une touche du dispositif, ou encore par exemple, par l'intermédiaire d'un dispositif tiers tel qu'une télécommande ou encore via un dispositif électronique agissant comme une télécommande, c'est-à-dire en opérant une fonction de commande à distance. Ainsi, de nombreux dispositifs électroniques actuels comprennent une circuiterie électronique principale qui comprend un processeur principal dimensionné pour gérer de nombreuses fonctionnalités (par exemple la gestion d'une interface de communication par fibre optique avec un réseau large bande) ainsi qu'une circuiterie électronique secondaire, ou auxiliaire, en charge quant à elle de garantir un minimum d'interopérabilité avec l'environnement du dispositif électronique lorsque la circuiterie électronique principale est totalement désactivée à des fins d'économie d'énergie. L'évolution des circuits intégrés dédiés à des fonctions spécifiques, telles que les fonctions inhérentes à une passerelle réseau domestique ou encore un récepteur-décodeur de télévision, à titres d'exemples non-limitatifs, est telle que ce type d'architecture présente généralement un processeur principal en charge d'effectuer des tâches courantes propres à une circuiterie principale, ainsi qu'un processeur secondaire ou auxiliaire opérant au sein d'une deuxième circuiterie électronique, secondaire ou auxiliaire, en charge de garantir une opérabilité minimale, avec une consommation électrique la plus réduite possible. Selon ces architectures connues, le processeur secondaire, souvent de type microcontrôleur, comprend généralement une interface de communication sans fil à courte portée permettant au dispositif électronique de communiquer avec un équipement distant présent dans l'environnement immédiat ou proche, notamment à des fins de permettre au dispositif électronique de sortir d'un mode de veille profonde.

Il est à noter que, pour ce faire, le processeur secondaire est alors apte à contrôler un circuit d'interface d'alimentation électrique capable de commuter une ou plusieurs lignes d'alimentation électriques non permanentes, pour alimenter électriquement et conditionnellement la circuiterie électronique principale. Ainsi, le processeur secondaire de la circuiterie électronique secondaire a vocation à contrôler l'alimentation électrique de la circuiterie électronique principale.

Dans le cas des systèmes embarqués de communication sans fil utilisant des coprocesseurs, ce type d'architecture fonctionne fréquemment selon des modes de communication spécifiques, appelés « mode RCP » (pour « Radio CoProcessor », en anglais) et « mode NCP » (pour « Network CoProcessor », en anglais). Ces modes sont définis en fonction des fonctionnalités respectives offertes par le processeur principal et le processeur secondaire. Selon le mode dit « mode RCP », le processeur secondaire ne gère que les aspects (fonctions) de communication sans fil en relation avec les couches physique et MAC, tandis que le processeur principal traite des couches réseau supérieures et de la partie applicative du logiciel. Selon le mode dit « mode NCP », le processeur secondaire gère à la fois les aspects (fonctions) de communication sans fil en relation avec les couches physique et MAC, ainsi qu'une grande partie de l'implémentation de la pile réseau (network stack, en anglais), ne laissant alors à la charge du processeur principal que la gestion de la couche applicative ou d'autres fonctions spécifiques. Si les modes de fonctionnement RCP et NCP décrits présentent l'avantage de simplifier les développements de dispositifs électroniques suivant l'architecture décrite, et d'en simplifier la maintenance logicielle, ces implémentations ne permettent pas d'opérer des communications selon des modes de communication suivant des protocoles de communication à courte portée récents tels que, par exemple, *Matter over Thread* lorsqu'un dispositif électronique tel que précité est configuré en veille profonde. En outre, l'impossibilité d'opérer de telles communications lorsque le dispositif électronique est configuré en veille profonde constitue un obstacle à une modification de paramètres de configuration globaux du dispositif électronique dont il doit être tenu compte pour mettre en œuvre en mode actif, et sous contrôle de la circuiterie électronique principale, certaines des fonctionnalités offertes par le dispositif électronique.

La situation peut être améliorée.

### EXPOSÉ DE L'INVENTION

Un objet de la présente invention est de proposer un dispositif électronique et un procédé de configuration de ce dispositif opérant en veille profonde permettant d'intégrer la gestion radio des couches physique et MAC et l'ensemble de la pile réseau, ainsi que des fonctions applicatives dans les capacités d'un seul processeur opérant en tant que processeur secondaire ou auxiliaire d'une circuiterie électronique secondaire ou auxiliaire demeurant active en configuration de veille profonde. Avantageusement, cela permet en outre d'opérer une configuration ou une reconfiguration du dispositif électronique opérant en mode de veille profonde.

A cet effet, il est proposé un dispositif électronique comprenant au moins une première circuiterie électronique et une deuxième circuiterie électronique, la première circuiterie électronique comprenant un premier processeur, dit « processeur principal » relié à une première mémoire dite « mémoire principale », et la deuxième circuiterie électronique comprenant un deuxième processeur, dit « processeur secondaire », relié à une deuxième mémoire dite « mémoire secondaire », le processeur secondaire comprenant une interface de communication sans fil, dite « interface radio basse consommation» et le processeur secondaire étant configuré pour communiquer via un lien de communication avec le processeur principal lorsque la première circuiterie électronique est alimentée en énergie électrique, la première circuiterie électronique étant configurée pour être alimentée conditionnellement en énergie électrique via un circuit d'interface d'alimentation contrôlé par le processeur secondaire et la deuxième circuiterie électronique étant continuellement alimentée en énergie électrique lorsque le dispositif électrique est connecté à une source principale d'alimentation électrique,
le dispositif électronique étant configuré tel que :
- l'interface radio basse consommation est configurée pour coopérer avec une mémoire de données de configuration accessible en écriture par le processeur principal via un lien de communication entre le processeur principal et le processeur secondaire,
- l'interface radio basse consommation est apte à opérer des communications bidirectionnelles de façon autonome avec au moins un dispositif distant, selon une configuration de communication déterminée à partir d'informations enregistrées dans la mémoire de données de configuration, lorsque la première circuiterie n'est pas alimentée en énergie électrique, et,
- le processeur secondaire est apte à mémoriser dans la mémoire secondaire des deuxièmes informations de configuration du dispositif électronique lorsque la première circuiterie n'est pas alimentée en énergie électrique.

Le dispositif selon l'invention peut en outre comprendre les caractéristiques optionnelles suivantes, considérées seules ou en combinaison :
- L'interface radio basse consommation est apte à opérer des communications selon un standard et/ou des protocoles de communications à courte portée.
- L'interface radio basse consommation est apte à opérer des communications selon un standard et/ou des protocoles de communications prédéterminés parmi : Bluetooth, Zigbee, et Thread.
- La mémoire secondaire comprend une zone mémoire de type mémoire non volatile.

Un autre objet de l'invention est un procédé de configuration d'un dispositif électronique tel que précité, le procédé étant exécuté dans la deuxième circuiterie électronique et comprenant :
- obtenir, depuis le processeur principal, dans la mémoire de données de configuration, des premières informations de configuration représentatives d'un mode de fonctionnement à opérer de l'interface radio basse consommation,
- opérer un premier contrôle du circuit d'interface d'alimentation pour désactiver l'alimentation de la première circuiterie électronique, de sorte à configurer le dispositif électronique en veille profonde,
- mémoriser, dans la mémoire secondaire, des deuxièmes informations de configuration du dispositif électronique obtenues via des communications sans fil grâce à l'interface radio basse consommation, selon un mode de fonctionnement de l'interface radio basse consommation déterminé par tout ou partie des premières informations de configuration obtenues, lorsque le dispositif électronique est configuré en veille profonde, et,
- opérer un deuxième contrôle du circuit d'interface d'alimentation pour activer l'alimentation électrique de la première circuiterie électronique, de sorte à configurer le dispositif électronique en mode actif, puis transmettre tout ou partie des deuxièmes informations de configuration audit processeur principal.

Le procédé selon l'invention peut présenter en outre les caractéristiques optionnelles suivantes, considérées seules ou en combinaisons :
- La mémoire de données de configuration est dédiée au fonctionnement d'un module de contrôle de l'interface radio basse consommation et est configurée pour comprendre des informations de configuration à utiliser en référence à une couche logicielle de niveau applicatif du module de contrôle de l'interface radio basse consommation.
- Le procédé comprend en outre, préalablement au premier contrôle du circuit d'interface d'alimentation : obtenir des deuxièmes informations de configuration, représentatives de paramètres de configuration matérielle et/ou logicielle dudit dispositif électronique.
- Le mode de communication à opérer de l'interface radio est défini selon un standard de communication parmi Bluetooth, Zigbee, et Thread.
- Le procédé comprend en outre, lors de communications opérées en veille profonde, une détection d'un évènement préalablement défini comme étant une condition de sortie de la veille profonde, puis un contrôle, par le processeur secondaire, du module d'interface d'alimentation pour activer l'alimentation de la première circuiterie électronique, de sorte à configurer le dispositif électronique en mode actif.
- L'évènement préalablement défini est la présence d'un dispositif tiers à portée électromagnétique de l'interface de communication basse tension.

Un autre objet de l'invention est un produit programme d'ordinateur comprenant des instructions de codes de programme pour exécuter des étapes d'un procédé de configuration tel que précédemment décrit, lorsque ce programme est exécuté par un processeur d'un dispositif électronique.

L'invention a enfin pour objet un dispositif de stockage comprenant un produit programme d'ordinateur tel que précité.

### BREVE DESCRIPTION DES DESSINS

Les caractéristiques de l'invention mentionnées ci-dessus, ainsi que d'autres, apparaîtront plus clairement à la lecture de la description suivante d'au moins un exemple de réalisation, ladite description étant faite en relation avec les dessins joints, parmi lesquels :
[Fig. 1] illustre un dispositif électronique de type passerelle réseau domestique selon un mode de réalisation ;
[Fig. 2] est un ordinogramme illustrant schématiquement des étapes d'un procédé amélioré de configuration d'un dispositif électronique exécuté dans une circuiterie secondaire du dispositif électronique déjà représenté sur la Fig. 1, selon un mode de réalisation ;
[Fig. 3] illustre schématiquement le dispositif électronique déjà représenté sur la Fig. 1 dans l'environnement duquel est notamment présent un dispositif électronique tiers de type smartphone permettant d'opérer une configuration du dispositif électronique opérant un mode de veille profonde ;
[Fig. 4] est un diagramme illustrant des détails d'échanges protocolaires entre les dispositifs déjà représentés sur la Fig. 3 et notamment une configuration en veille profonde du dispositif électronique déjà représenté sur la Fig. 1 ;
[Fig. 5] est un diagramme illustrant un exemple d'architecture interne d'un processeur principal du dispositif électronique déjà représenté sur la Fig. 1 ; et,
[Fig. 6] est un diagramme illustrant un exemple d'architecture interne d'un processeur secondaire du dispositif électronique déjà représenté sur la Fig. 1.

### EXPOSE DETAILLE DE MODES DE REALISATION

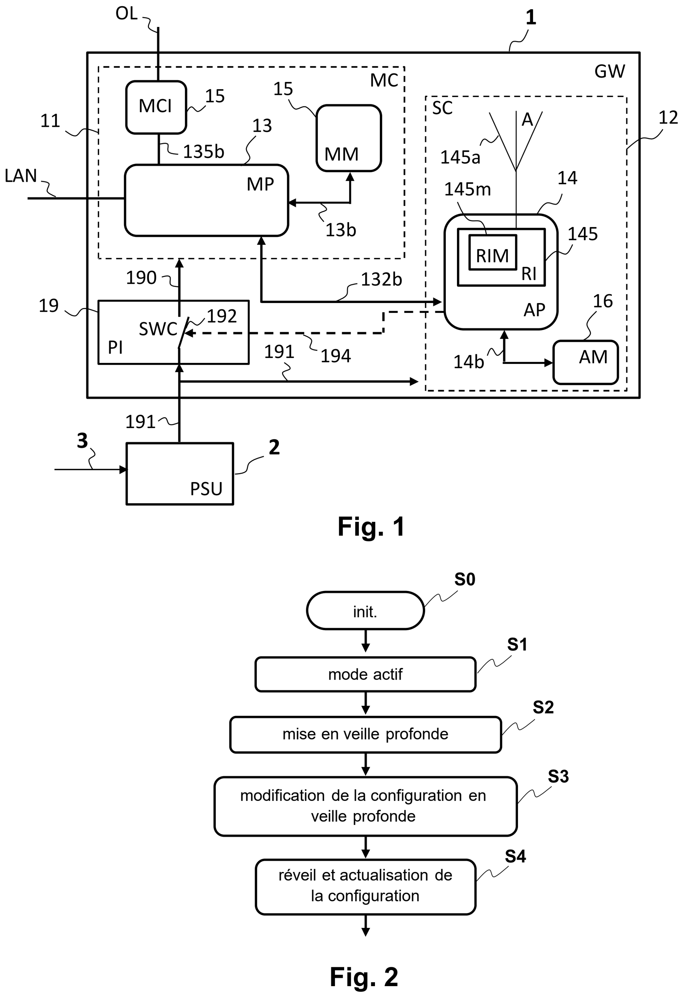

La Fig. 1 illustre un dispositif électronique GW 1, ici de type passerelle de communication réseau, encore appelée « passerelle réseau » GW 1 dans la présente description, et d'un type parfois appelé usuellement « *gateway »,* de l'anglais.

La passerelle réseau GW 1 est configurée pour opérer principalement, mais pas exclusivement, des fonctions de lien et d'interface de communication entre un premier réseau, de type étendu large bande ou WAN (de l'anglais « Wide Area Network »), connecté à une entrée OL d'une interface de communication principale MCI 15 de la passerelle réseau GW1, et un deuxième réseau, local, de type LAN (de l'anglais « Local Area Network », connecté à une interface LAN d'un processeur principal MP 13 de la passerelle réseau GW 1. La passerelle réseau GW 1 comprend également des moyens de communications sans-fil afin d'être apte à établir un ou des réseaux sans-fils, de type WLAN (de l'anglais « Wireless Local Area Network »), par exemple utilisant la technologie ou standard 802.11 dans l'une de ses versions, telles que 802.11-2012, 802.11-2016 ou 802.11-2020, avec l'un ou plusieurs de ces amendements tels que 802.11n-2009, 802.11ac-2013, 802.11ax-2021, ou la version provisoire de l'amendement P802.11be dans son édition D7.00. Ce ou ces réseaux WLAN sont gérés principalement par le processeur principal MP 13.

La passerelle réseau GW 1 comprend une première circuiterie électronique MC 11 qui est alimentée conditionnellement en énergie électrique à partir d'un module d'alimentation PSU 2, via un module (ou circuit) d'interface d'alimentation électrique PI 19, encore appelé classiquement « interface de puissance ». Le module d'alimentation électrique PSU 2 est connecté à un réseau de distribution électrique monophasé 3, communément appelé « alimentation secteur ». La première circuiterie électronique MC 11 comprend un processeur principal MP 13 agencé pour implémenter de nombreuses fonctions usuelles d'une passerelle réseau domestique. Le processeur principal MP 13 est relié à une première mémoire MM 15, dite « mémoire principale » MM 15 qui comprend des zones mémoire de type mémoire vive et des zones mémoire de type mémoire non volatile (ou mémoire morte).

Le processeur principal MP 13, coopérant avec la mémoire principale MM 15, exécute la majeure partie des fonctions supportées et proposées par la passerelle réseau GW 1, voire l'essentiel des fonctions principales disponibles.

A titre d'exemples non limitatifs, le processeur principal MP 13 gère et contrôle l'interface de communication principale MCI 15 de la première circuiterie électronique à laquelle il est relié via un lien de communication 135b, ainsi qu'une pluralité d'interfaces de communication à un réseau local, semblables à l'interface LAN de la première circuiterie électronique.

La passerelle réseau GW 1 comprend en outre une deuxième circuiterie électronique SC 12, toujours alimentée en énergie électrique par le module d'alimentation électrique PSU 2 lorsque ce dernier est connecté au réseau de distribution électrique 3, dit « secteur ». La deuxième circuiterie électronique SC 12, a vocation à opérer comme circuiterie électronique secondaire, ou auxiliaire, et comprend un deuxième processeur AP 14, adapté à un fonctionnement présentant une très faible consommation d'énergie électrique (par exemple inférieure à 0,5 W). Le processeur secondaire AP 14 de la deuxième circuiterie électronique SC 12 est relié au processeur principal de la première circuiterie électronique MC 11 via un lien de communication 132b. Selon un mode de réalisation, le lien de communication 132b est un lien de communication filaire de type bidirectionnel. Par exemple, le lien de communication 132b est un lien sériel entre deux modules de type UART ou un bus SPI.

Avantageusement, le processeur secondaire AP 14 est relié à une deuxième mémoire AM 16, dite « mémoire secondaire » AM 16, qui comprend au moins une ou plusieurs zones de mémoire de type mémoire vive et éventuellement une ou plusieurs zones de mémoire de type mémoire non volatile (ou mémoire morte). La mémoire secondaire AM 16 est la mémoire de travail du processeur secondaire AP 14.

En outre, le processeur secondaire AP 14 comprend une interface de communication à faible consommation RI 145 reliée à un système antennaire A 145a. Selon un exemple de réalisation, cette interface de communication est compatible avec le standard Bluetooth Low Energy (« BLE ») et est à courte portée. Dans un autre exemple cette interface de communication est compatible avec un protocole de type LoWPAN, tel que Thread et offre une portée de communication équivalente ou supérieure à celle offerte par une technologie de type 802.11 sur la bande 2.4GHz.

Grâce à cette interface de communication, la passerelle réseau GW 1 est apte à communiquer avec tout dispositif distant présent dans son environnement et à sa portée électromagnétique, dès lors que ce dispositif distant est compatible avec le ou les protocoles et/ou standards de communication supportés par l'interface de communication RI 145. Selon un mode de réalisation, l'interface de communication RI 145 est une interface de type faible consommation à courte portée. Selon des exemples non limitatifs de réalisation, l'interface RI 145 est compatible avec l'un des protocoles ou ensemble de protocoles Bluetooth, Zigbee, Thread, UWB (marques déposées). Bien évidemment, l'interface de communication peut implémenter d'autres protocoles et/ou standards de communication existants. Thread est un protocole de communication sans fil maillé (basé sur IPv6). Matter est un standard de connectivité ouvert et basé sur IP, conçu l'internet des objets et par exemple pour la technologie des maisons intelligentes. Le protocole Thread est particulièrement adapté pour porter de la messagerie de contrôle et/ou de données issue du standard de connectivité Matter.

Pour ce qui concerne les modes de fonctionnement et de consommation d'énergie respectivement définis comme étant un « mode actif » et un « mode veille profonde », le processeur secondaire AP 14 est configuré pour contrôler une ligne de contrôle 194 (via un port de sortie du processeur secondaire AP 14), laquelle ligne de contrôle est apte à activer ou désactiver un interrupteur d'alimentation SWC 192 compris dans le circuit d'interface d'alimentation électrique PI 19. Ainsi, quand le processeur secondaire AP 14 contrôle une fermeture de l'interrupteur d'alimentation SWC 192, l'énergie électrique fournie à la sortie 191 du module d'alimentation électrique PSU 2 est disponible sur un lien d'alimentation 190 qui relie la sortie du module d'interface d'alimentation PI 19 à la première circuiterie électronique MC 11, et la passerelle réseau GW 1 opère alors en mode actif. De façon opposée, quand le processeur secondaire AP 14 contrôle une ouverture de l'interrupteur d'alimentation SWC 192, l'énergie électrique délivrée par le module d'alimentation électrique PSU 2 n'est plus fournie à la sortie 190 du module d'alimentation électrique PSU 2 qui relie la sortie du module d'interface d'alimentation PI 19 à la première circuiterie électronique MC 11. Il en résulte que la première circuiterie électronique MC 11 n'est plus alimentée en énergie électrique. La passerelle réseau GW 1 opère alors en mode veille profonde et seule la deuxième circuiterie électronique SC 12 demeure alimentée en énergie électrique via le lien d'alimentation 191 connecté en amont du module interface d'alimentation électrique PI 19. C'est donc le processeur secondaire AP 14, lequel demeure continuellement alimenté en énergie électrique lorsque le dispositif électronique passerelle réseau GW 1 est relié au secteur, qui contrôle les transitions entre le mode actif et le mode veille profonde, selon des conditions de transition prédéterminées.

Selon un mode de réalisation, une troisième mémoire RIM 145m dédiée à un paramétrage de la pile de communication radio de l'interface de communication RI 145 est astucieusement et avantageusement intégrée dans ou associée à cette dernière, de sorte à permettre à un module contrôleur interne de l'interface de communication RIM 145m de disposer de l'ensemble des éléments utiles et nécessaires à l'implémentation de communications sans fil et à courte portée avec des dispositifs de communication tiers, selon des protocoles et/ou standards de communication récents, lorsque la passerelle réseau GW 1 opère en mode veille profonde. Selon une variante de réalisation, la mémoire RIM 145m est implémentée extérieurement à l'interface de communication RI 145 mais est reliée à celle-ci, directement ou via le processeur secondaire AP 14.

La mémoire RIM 145m est ici appelée « mémoire pile radio ». Selon un mode de réalisation, la troisième mémoire RIM 145m, dédiée à un paramétrage de la pile de communication radio de l'interface de communication RI 145 est comprise dans la mémoire secondaire AM 16. Selon une variante, la troisième mémoire RIM 145m est implémentée dans un composant séparé et indépendant de la mémoire secondaire AM 16.

La troisième mémoire RIM 145m, ou mémoire pile radio, dédiée à la pile de communication de l'interface de communication RI 145, est configurée pour mémoriser des paramètres de fonctionnement de l'interface de communication RI 145 en particulier des paramètres de fonctionnement d'une couche logicielle de niveau applicatif de la pile de communication de l'interface de communication RI 145. Astucieusement encore, cette mémoire dédiée de la pile de communication de l'interface de communication RI 145 est directement accessible par le processeur principal MP 13 ou éventuellement via le processeur secondaire AP 14, grâce à des échanges protocolaires définis entre le processeur principal MP 13 et le processeur secondaire AP 14. Il est alors avantageusement possible pour un dispositif tiers distant de communiquer avec la passerelle réseau GW 1, selon des protocoles et/ou standards de communication récents, y compris en conformité avec des spécifications de communication de niveau applicatif, par l'intermédiaire de l'interface de communication à courte portée et à faible niveau de consommation électrique RI 145. Des tests en laboratoire ont montré qu'un dispositif de type passerelle réseau selon l'architecture matérielle et logicielle décrite consommant jusqu'à 30 W en mode actif est avantageusement capable d'opérer des communications suivant un standard usuellement nommé « Bluetooth » ou « Matter on Thread » lorsque le même dispositif ne consomme alors pas plus de 500 mW en veille profonde.

En mode veille profonde, le processeur secondaire AP 14 gère de manière autonome l'interface de communication RI 145 opérant un rôle d'interface de communication sans fil alternative au sein de la passerelle réseau GW 1 grâce à l'intégration complète d'une pile réseau et d'une couche logicielle applicative (ou couche logicielle de niveau applicatif) minimale, garantissant ainsi une continuité d'exploitation de l'interface de communication sans fil RI 145 en mode veille profonde de la passerelle réseau GW 1, y compris lorsque son processeur principal MP 13 est totalement inactif puisque non alimenté en énergie électrique.

Selon un mode de réalisation, le module de contrôle interne de l'interface de communication sans fil RI 145 implémente et supporte la technologie Bluetooth Low Energy ainsi que la plateforme radio 2.4G IEEE 802.15.4 (Thread et Zigbee) et toutes les couches réseau utiles aux technologies BLE et Thread sont implémentées dans les piles réseau (encore appelées communément Network Stacks) de l'interface de communication sans fil RI 145.

Selon un mode de réalisation, un module dit « Lightweight Co-processor Application », exécuté par le processeur secondaire AP 14, gère l'alimentation électrique de la passerelle réseau GW 1 en combinaison avec des applications exécutées par le processeur principal MP 13 lorsque la passerelle réseau GW 1 opère en mode actif pour obtenir des informations spécifiques liées à la gestion des protocoles de communication de l'interface de communication sans fil RI 145 à opérer lorsque la passerelle réseau opère en mode veille profonde. Ainsi, l'interface de communication sans fil RI 145 est apte à opérer des communications sans fil en toute autonomie lorsque la passerelle réseau GW 1 opère en veille profonde, tout en maintenant, par exemple, des communications selon un protocole de communication comme BLE ou Matter over Thread, à titre d'exemples.

Selon un mode de réalisation, la communication entre le processeur principal MP 13 et le processeur secondaire AP 14, possible en mode actif, est réalisé par l'envoi de messages protocolaires via le lien de communication 132b, est assuré par un module appelé ici « communication handler ».

Selon un mode de réalisation, lorsque la passerelle réseau GW 1 opère en mode actif, le processeur principal MP 13 gère le protocole de communication mis en œuvre par l'interface de communication RI 145 via le module de contrôle interne de l'interface de communication RI 145 opérant en mode NCP. Ainsi, lors d'une connexion Bluetooth par exemple, le processeur principal MP 13 opère en tant qu'hôte BLE NCP, prenant en charge l'initialisation et la configuration de la pile Bluetooth ainsi que les services BLE associés. Il transmet en outre, via la mémoire dédiée RIM 145m, une ou plusieurs configurations au processeur secondaire AP 14 opérant la fonction précitée de « Lightweight Co-processor Application » utiles et nécessaires à la gestion du ou des protocoles et/ou standards de communication mis en œuvre lorsque la passerelle réseau GW 1 opère en veille profonde.

Selon un autre exemple de réalisation, et dans le contexte d'une connexion selon Thread, le processeur principal MP 13 opère le rôle d'hôte Thread NCP (Host NCP Thread) et opère également le rôle de contrôleur Matter over Thread. Le processeur principal MP 13 est alors responsable et garant de l'initialisation et de la configuration de la pile Thread ainsi que du « comissioning Matter ». En outre, il communique, là aussi, via la mémoire dédiée RIM 145m, une ou plusieurs configurations au processeur secondaire AP 14 opérant la fonction précitée de « Lightweight Co-processor Application », indispensables pour gérer et opérer le protocole de communication Matter over Thread lorsque la passerelle réseau GW 1 opère en veille profonde.

L'architecture permet là encore, au processeur principal MP 13, de partager l'exécution de certaines prérogatives de la couche applicative avec le processeur secondaire AP 14, notamment pour ce qui concerne les communications sans fil.

En effet, lorsque la passerelle réseau GW 1 opère en mode actif, le processeur principal contrôle l'interface de communication RI 145 en mode NCP et transmet, via la mémoire dédiée RIM 145m, une ou plusieurs configurations spécifiques, dont notamment des configurations dites « utilisateur » au processeur secondaire AP 14, pour la gestion des communications sans fil à opérer en veille profonde. En mode veille profonde, le processeur secondaire AP 14 utilise alors les informations (données) de configuration précédemment transmises en mode actif par le processeur principal MP 13, comme par exemple, la définition d'un évènement défini comme devant provoquer une sortie du mode de veille profonde de la passerelle réseau GW 1, tel qu'un changement d'état d'un dispositif tiers distant connecté via Matter over Thread ou via une connexion Bluetooth. Un tel dispositif distant est par exemple un téléphone intelligent connecté (smartphone) d'un utilisateur.

Ainsi, avantageusement, lorsque la passerelle réseau GW 1 opère en mode de veille profonde, le processeur secondaire AP 14 est en outre capable de recevoir, via l'interface de communication sans fil RI 145, et depuis un dispositif tiers distant, des deuxièmes informations de configuration, utiles à une configuration ou une reconfiguration de paramètres de fonctionnement de la passerelle réseau GW 1, et de mémoriser ces deuxièmes informations de configuration dans sa mémoire de travail AM 16. De telles deuxièmes informations de configuration proviennent par exemple d'un utilisateur.

Avantageusement, le processeur secondaire AP 14 peut transmettre ces informations de façon différée au processeur principal MP 13 de la passerelle réseau GW 1, lorsque celle-ci opèrera à nouveau en mode actif. Ainsi, la deuxième circuiterie électronique peut se comporter comme une mémoire cache pour la transmission d'information de configuration entre un dispositif tiers distant connecté à l'interface de communication sans fil RI 145 et le processeur principal MP 13 et sa mémoire de travail, la mémoire principale MM 15.

La Fig. 2 illustre schématiquement des étapes d'un procédé de configuration de la passerelle réseau GW 1 exécuté dans la passerelle réseau GW 1, sous contrôle du processeur secondaire AP 14 opérant de façon combinée avec sa mémoire de travail, la mémoire secondaire AM 16.

Une étape **S0** est une étape d'initialisation suivant une mise sous tension de la passerelle réseau GW 1 et au terme de laquelle tous les circuits utiles aux processus décrits sont normalement alimentés en énergie électrique, initialisés et opérationnels. Lors d'une étape S1, le processeur principal MP 13 et le processeur secondaire AP 14 opèrent tous les deux leurs fonctions principales respectives dont les fonctions de passerelle réseau domestique entre le réseau étendu relié au lien de communication OL et le réseau local connecté au lien de communication LAN, en plus d'autres fonctions usuelles d'interconnexion. En outre, lors de l'étape **S1**, le processeur principal transmet des informations (ou données) de configuration, dont notamment des premières informations de configuration de niveau applicatif, au processeur secondaire AP 14, via la mémoire RIM 145m dédiée à cet effet, de l'interface de communication RI 145. Les informations de communication sont transmises via le lien de communication 132b établi entre les deux processeurs MP 13 et AP 14. Par exemple, le processeur principal opérant un rôle et des fonctions de BLE NCP Host assure la gestion de l'interface de communication RI 145 et configure une pile de communication selon le protocole / standard de communication Bluetooth à partir d'un modèle de données (ou *data model* de l'anglais) BLE personnalisé à un utilisateur et transmet au processeur secondaire, tout ou partie des paramètres, dont notamment des paramètres de configuration Bluetooth à considérer pour opérer en veille profonde. Il est à noter qu'en mode actif de la passerelle réseau GW 1, un ou plusieurs utilisateurs peuvent interagir avec les applications en cours d'exécution par le processeur principal MP 13, par exemple via une interface utilisateur de type Web UI ou encore via une application mobile exécutée sur un smartphone connecté à l'interface de communication RI 145, pour ajuster des paramètres de configuration à prendre en compte ultérieurement par le processeur secondaire AP 14, en veille profonde. Un tel paramètre concerne par exemple une capacité de sortie de la passerelle réseau GW 1 de son mode veille profonde lors d'une première connexion Bluetooth d'un smartphone d'un utilisateur.

Astucieusement et avantageusement, lorsqu'il opère en mode actif, le processeur principal MP 13 transmet en outre des informations de configuration globale de la passerelle réseau GW 1 au processeur secondaire AP 14, qui les mémorise dans la mémoire secondaire AM 16, à des fins de sauvegarde lors d'un fonctionnement à venir en veille profonde. En effet, puisque la mémoire AM 16 est implémentée et mise en œuvre dans la deuxième circuiterie électronique SC 12, elle est continuellement alimentée lorsque la passerelle réseau GW 1 est reliée à l'alimentation secteur via son module d'alimentation PSU 2.

Lors d'une étape S2, le processeur secondaire AP 14 configure la passerelle réseau GW 1 en mode veille en contrôlant le lien de contrôle 194 qui ouvre l'interrupteur d'alimentation 192 et isole la ligne d'alimentation 190 de la première circuiterie électronique MC 11 (et donc du processeur principal MP 13) du module d'alimentation PSU 2. Cette configuration en mode veille peut être opérée à partir de l'observation d'un contexte particulier ou encore selon la survenance d'un évènement prédéterminé parmi une liste d'évènements prédéfinis. Par exemple, le processeur secondaire AP 14 peut détecter qu'aucune activité n'a été détectée pendant une période d'une durée déterminée. Par exemple, aucun flux de communication en relation avec une utilisation de la passerelle réseau GW 1 ou via un dispositif connecté à la passerelle n'a été détecté depuis une durée de 10 minutes, ou 15 minutes, etc. Selon cet exemple et dans ce contexte, il apparait qu'un fonctionnement en mode actif de la passerelle ne soit pas utile et qu'une configuration en mode veille profonde soit profitable alors en termes d'économie d'énergie. Selon un autre exemple, le processeur secondaire peut configurer le mode veille profonde de la passerelle réseau GW 1 selon un calendrier préalablement défini par un utilisateur, par exemple selon les habitudes de présence au domicile des utilisateurs.

Lors d'une étape S3, la passerelle réseau GW 1 est configurée en veille profonde et seule la deuxième circuiterie électronique SC 12 comprenant le processeur secondaire AP 14 relié à sa mémoire de travail est opérationnelle, parmi les deux circuiteries électroniques MC 11 et SC 12. Le processeur secondaire AP 14 opère alors des fonctions réduites mais a la capacité de gérer des communications à courte portée et basse consommation via son interface de communication RI 145 et selon des données de configurations précédemment obtenues depuis le processeur principal MP 13 et mémorisées dans la mémoire RIM 145m dédiée à cet effet. Le processeur secondaire peut en outre mémoriser, notamment dans la mémoire secondaire AM 16, des informations ou données reçues via l'interface de communication RI 145. En particulier, le processeur secondaire AP 14 a la capacité de gérer des fonctions de niveau applicatif en fonction des communications sans fil opérées via l'interface de communication RI 145, comme la capacité d'enregistrer temporairement dans sa mémoire AM 16, lors d'une étape S4, des paramètres de configuration globaux pour configurer ensuite la passerelle réseau GW 1 en mode actif (soit « réveiller » la passerelle) et actualiser ces paramètres de configuration dans la mémoire principale MM 15. En effet, en veille profonde, un dispositif tiers distant d'un utilisateur peut donc communiquer avec le processeur secondaire via l'interface de communication RI 145, en mode BLE ou Thread, par exemple, pour transmettre à la passerelle réseau GW 1 de nouveaux paramètres de configuration ou même lire des paramètres de configuration courants, via la mémoire secondaire AM 16. Ainsi, une nouvelle configuration transmise peut par exemple, via le processeur secondaire AP 14, solliciter le contrôle du module interface d'alimentation électrique PI 19, pour établir l'alimentation électrique de la première circuiterie électronique MC 11 au moyen de l'interrupteur (ou commutateur) d'alimentation SWC 192. Lorsque le processeur secondaire AP 14 opère un tel contrôle, la passerelle réseau GW 1 opère à nouveau en mode actif. Il est alors possible pour le processeur secondaire AP 14 de transmettre au processeur principal MP 13, des informations précédemment enregistrées dans la mémoire secondaire AM 16. La mémoire secondaire AM 16 opère alors comme une mémoire cache utile à une transmission différée de paramètres de configuration globale de la passerelle réseau GW 1, à partir d'un dispositif tiers distant, connecté via l'interface de communication RI 145.

Avantageusement, il est ainsi possible de configurer ou de préconfigurer la passerelle réseau GW 1 pendant une phase de réveil (transition entre une veille profonde et un mode actif), laquelle phase de réveil peut durer plusieurs secondes, voire plusieurs dizaines de secondes.

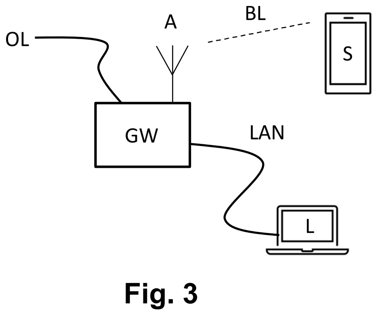

La Fig. 3 illustre schématiquement un environnement et une configuration d'utilisation de la passerelle réseau GW1 opérant une interconnexion d'un réseau étendu large bande relié à son lien de communication OL et un réseau local LAN auquel est relié un ordinateur de type « laptop » L. Selon l'exemple d'utilisation décrit, un smartphone S est actif à portée électromagnétique du système antennaire A de la passerelle réseau GW 1 et peut communiquer avec le processeur secondaire AP 14, via l'interface de communication IR 145, lorsque la passerelle réseau GW 1 opère en mode veille. Un lien de communication sans fil BL est alors établi entre la passerelle réseau GW 1 et le smartphone S. Selon l'exemple décrit ici, le lien de communication est configuré pour opérer des communications selon un protocole de communication Bluetooth.

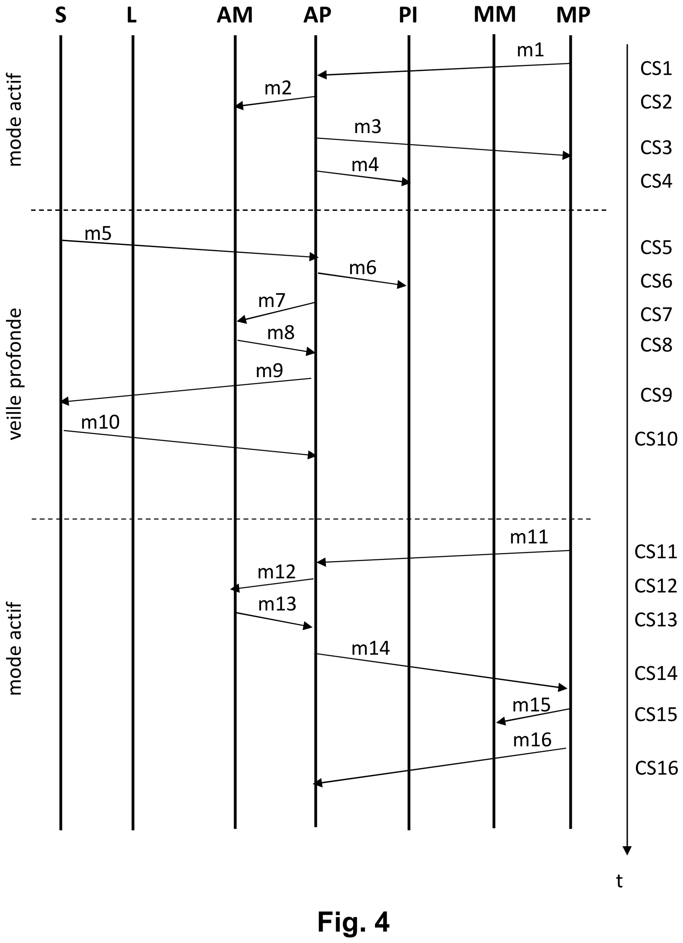

La **Fig. 4** décrit une séquence d'échanges d'informations entre les différents éléments de l'environnement illustré en relation avec la Fig. 3, illustrant une mise en veille profonde de la passerelle réseau GW 1 suivie d'une configuration à partir du smartphone S, lors de la veille profonde. A des fins de simplification, un envoi ou une transmission de données ou d'informations, de quelque nature que ce soit (par exemple un signal électrique modifié), est appelé ici « un message ».

Selon l'exemple décrit, le processeur principal MP 13, devant se configurer en mode de veille profonde (par exemple suite à une longue période d'inactivité au niveau applicatif) adresse au processeur secondaire AP 14, lors d'une étape **CS1,** un message ml de configuration de l'interface de communication RI 145 comprenant des informations de configuration d'une pile réseau complète, y compris d'informations de configuration de niveau applicatif, ainsi que des informations de configuration globale, c'est-à-dire une table de paramètres de configuration globaux courants (ou « data model ») de la passerelle réseau GW 1, à des fins de sauvegarde, et éventuellement d'actualisation par reconfiguration. Cette sauvegarde de paramètres globaux est en quelque sorte une sauvegarde de contexte en vue d'une veille profonde.

Lors d'une étape **CS2,** le processeur secondaire AP 14 mémorise les informations propres à l'interface de communication RI 145 dans la mémoire RIM 145m et les informations de contexte (ou paramètres globaux courants sous forme de « data model ») dans la mémoire secondaire AM 16 dans un message m2. Le processeur secondaire AP 14 accuse alors réception de ces informations au processeur principal MP 13, via un message m3 et lors d'une étape **CS3,** ainsi que de la nécessité de contrôler la passerelle réseau GW 1 en mode de veille profonde. Le processeur secondaire AP 14 opère alors un contrôle en mode de veille profonde via un message m4, lors d'une étape **CS4,** adressé sous forme d'un signal au module d'interface d'alimentation électrique PI 19 qui désactive l'alimentation en énergie électrique de la première circuiterie électronique MC 11. La passerelle réseau GW 1 est à ce stade configurée en mode de veille profonde et ne peut donc communiquer avec des dispositifs tiers distants que via son interface de communication RI 145.

Puis, lors d'une étape **CSS,** le smartphone S, s'approche de la passerelle réseau GW 1, par exemple du fait d'un retour d'un utilisateur au domicile et pour consulter des paramètres de configuration, et adresse un message de connexion m5 au processeur secondaire AP 14, via l'interface de communication RI 145. Le processeur secondaire AP 14 opère lors d'une étape **CS6** et via un message m6 un contrôle du module d'interface d'alimentation électrique PI 19 en vue de réveiller la passerelle GW 1, c'est-à-dire de contrôler un mode actif via le rétablissement d'alimentation en énergie électrique de la première circuiterie électronique MC 11. Il s'agit là et en quelque sorte d'une commande anticipée de réveil puisque dans ce contexte, il est largement possible et envisageable qu'un utilisateur souhaite utiliser la passerelle réseau GW 1 ou consulter sa configuration. Lors d'une étape **CS7,** le processeur secondaire a accès à la mémoire secondaire AM 16 via un message m7 et obtient tout ou partie des paramètres de configuration globaux précédemment sauvegardés dans la mémoire AM 16 lors d'une étape **CS8,** via un message m8. Le processeur secondaire AP 14 est alors en mesure de répondre à la demande d'informations du smartphone S et lui adresse un message de réponse m9 lors d'une étape **CS9,** pour ce faire. Selon l'exemple décrit, le smartphone S (ou du moins un utilisateur utilisant le smartphone S) souhaite modifier un ou plusieurs paramètres de configuration globaux de la passerelle GW 1 (donc du « data model ») et adresse au processeur secondaire AP 14, via l'interface de communication RI 145, un message m10 en ce sens lors d'une étape **CS10.**

Selon l'exemple décrit, le processeur principal MP 13, redevenu actif après une période de réveil, notifie au processeur secondaire AP 14, lors d'une étape **CS11** et via un message m11, sa disponibilité pour reprendre un contrôle des fonctions principales de la passerelle réseau GW 1. Le processeur secondaire actualise quant à lui, lors des étapes **CS12** et **CS13** le contenu de ses paramètres globaux (la zone mémoire « data model » dans la mémoire secondaire AM 16) à partir des informations de (re)configuration obtenues depuis le smartphone S dans le message m10. Cette actualisation de la configuration locale à la mémoire AM 16 se fait via les messages m12 et m13 qui correspondent au déroulement des accès mémoire vers la mémoire AM 16 par le processeur secondaire AP 14.

Le processeur secondaire AP 14 ayant alors bien reçu la notification de disponibilité du processeur principal MP 13, adresse à ce dernier, lors d'une étape **CS14** et via un message m14, une version complète actualisée des paramètres globaux (soit une copie du « data model »), opérant ainsi comme un contrôleur de mémoire cache. Le processeur principal MP 13 met alors à jour sa mémoire principale MM 15 via un message m15 et lors d'une étape **CS15,** puis accuse réception de ces informations de configuration au processeur secondaire AP 14 via un message m16 et lors d'une étape **CS16.**

Avantageusement, et grâce à la capacité de communication de l'interface de communication sans fil RI 145, alors autonome, une configuration ou reconfiguration d'un ou plusieurs paramètres de fonctionnement globaux de la passerelle réseau GW 1 est possible y compris lorsque celle-ci opère en mode de veille profonde. Ceci est notamment rendu possible du fait de la mémoire dédiée RIM 145 qui permet d'implémenter une pile radio complète pour opérer de façon autonome des communications sans fil en veille profonde, ainsi qu'à la présence de la mémoire secondaire AM 16, couplée au processeur secondaire AP 14, opérant comme une mémoire cache pendant les phases de veille profonde.

Selon un mode de réalisation, tout ou partie de la mémoire secondaire AM 16 est implémenté sous forme de mémoire non volatile, par exemple sous forme de mémoire à technologie dite « flash », ce qui permet de conserver les informations obtenues en cas de coupure de l'alimentation secteur. En effet, dans un tel cas de figure, et en l'absence de batterie de secours, ni la première circuiterie MC 11, ni la deuxième circuiterie SC 12 ne demeurent alimentées en énergie électrique.

Après une remise sous tension et suite à une interruption accidentelle du courant, il est possible de retrouver les derniers paramètres de configuration globaux dans la mémoire secondaire AM 16, et de notifier à un utilisateur quels sont les paramètres de configuration alors courants, faisant suite à l'incident. Il est en outre possible de solliciter un utilisateur, via une ou plusieurs interfaces utilisateur, pour ajuster ou mettre en conformité la configuration alors courante au regard de ses besoins.

Avantageusement, ces mécanismes permettent de configurer la passerelle réseau GW 1, aussi bien via un réseau LAN auquel elle est reliée que via une application dédiée exécutée sur un smartphone, y compris lorsque la passerelle réseau GW 1 opère en veille profonde, et sans avoir à attendre la fin d'un processus de redémarrage en mode actif de celle-ci. Un cas d'usage avantageux est, par exemple, de pouvoir configurer la passerelle réseau GW 1 alors que celle-ci opère en veille profonde, sans à avoir à la sortir préalablement de son état de veille profonde, puis d'avoir à la configurer lorsqu'elle est en redevenue opérante en mode actif, et enfin d'avoir à effectuer un redémarrage de la passerelle réseau GW 1 pour que la nouvelle configuration puisse être prise en compte.

L'exemple de séquence décrit ici n'est évidemment pas limitatif et a seulement vocation à illustrer les échanges protocolaires de messages rendus possibles entre les différents éléments ou dispositifs en présence grâce aux capacités de communication rendues accessibles en mode veille profonde de la passerelle réseau GW 1. D'autres séquences de messages de configuration pourraient être implémentées, notamment en utilisant d'autres protocoles et/ou standards de communication à courte portée et à basse consommation d'énergie.

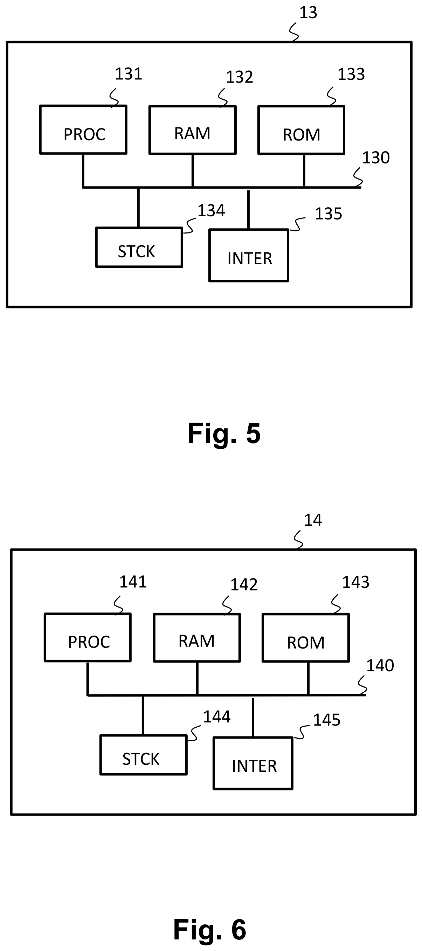

La **Fig. 5** illustre schématiquement un exemple d'architecture interne du processeur principal MP 13 de la passerelle réseau GW1. Il est à noter que la Fig. 5 pourrait également représenter une architecture interne de la première circuiterie électronique MC 11. Selon l'exemple d'architecture matérielle représenté à la Fig. 5, le processeur principal MP 13 comprend alors, reliés par un bus de communication 130 : un processeur ou CPU (« Central Processing Unit » en anglais) 131 ; une mémoire vive RAM (« Random Access Memory » en anglais) 132 ; une mémoire morte ROM (« Read Only Memory » en anglais) 133 ; une unité de stockage telle qu'un disque dur de type flash (ou une interface vers un lecteur de support de stockage, tel qu'un lecteur de cartes SD (« Secure Digital » en anglais) 134 ; au moins une interface de communication 135 permettant au processeur principal MP 13 de communiquer avec d'autres dispositifs auxquels il est relié, tels que l'interface de communication MCI 15 ou le processeur secondaire AP 14, par exemple.

Le processeur 131 est capable d'exécuter des instructions chargées dans la RAM 132 à partir de la ROM 133, d'une mémoire externe (non représentée), d'un support de stockage (tel qu'une carte SD), ou d'un réseau de communication. Lorsque le processeur principal MP 13 de la passerelle réseau GW 1 est mis sous tension, le processeur 131 est capable de lire de la RAM 132 des instructions et de les exécuter. Ces instructions forment un programme d'ordinateur causant la mise en œuvre, par le processeur 131, de tout ou partie d'un procédé décrit en relation avec les Fig. 3 et Fig. 4 ou des variantes décrites de ces procédés.

Tout ou partie du procédé décrit en relation avec les Fig. 3 et Fig. 4 ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'environnement du processeur principal MP13 comprend de la circuiterie électronique configurée pour mettre en œuvre les procédés décrits en relation avec lui-même. Bien évidemment, l'environnement du processeur principal MP 13 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

La **Fig. 6** illustre schématiquement un exemple d'architecture interne du processeur secondaire AP 14 de la passerelle réseau GW1. Il est à noter que la Fig. 6 pourrait également représenter une architecture interne de la deuxième circuiterie électronique SC 12. Selon l'exemple d'architecture matérielle représenté à la Fig. 6, le processeur secondaire AP 14 comprend alors, reliés par un bus de communication 140 : un cœur processeur ou cœur CPU (« Central Processing Unit » en anglais) 141 ; une mémoire vive RAM (« Random Access Memory » en anglais) 142 ; une mémoire morte ROM (« Read Only Memory » en anglais) 143 ; une unité de stockage telle qu'un disque dur de type flash (ou une interface vers un lecteur de support de stockage, tel qu'un lecteur de cartes SD (« Secure Digital » en anglais) 144 ; au moins l'interface de communication RI 145 permettant au processeur secondaire AP 14 de communiquer avec d'autres dispositifs auxquels il est relié.

Le cœur processeur 141 est capable d'exécuter des instructions chargées dans la RAM 132 à partir de la ROM 133, d'une mémoire externe (non représentée), d'un support de stockage (tel qu'une carte SD), ou d'un réseau de communication. Lorsque le processeur secondaire AP 14 de la passerelle réseau GW 1 est mis sous tension, le cœur processeur 141 est capable de lire de la RAM 142 des instructions et de les exécuter. Ces instructions forment un programme d'ordinateur causant la mise en œuvre, par le cœur processeur 141, et donc par le processeur AP 14, de tout ou partie d'un procédé décrit en relation avec les Fig. 3 et Fig. 4 ou des variantes décrites de ces procédés.

Tout ou partie du procédé décrit en relation avec les Fig. 3 et Fig. 4 ou leurs variantes décrites peut être implémenté sous forme logicielle par exécution d'un ensemble d'instructions par une machine programmable, par exemple un DSP (« Digital Signal Processor » en anglais) ou un microcontrôleur, ou être implémenté sous forme matérielle par une machine ou un composant dédié, par exemple un FPGA (« Field-Programmable Gate Array » en anglais) ou un ASIC (« Application-Specific Integrated Circuit » en anglais). En général, l'environnement du processeur secondaire AP 14 comprend de la circuiterie électronique configurée pour mettre en œuvre les procédés décrits en relation avec lui-même. Bien évidemment, l'environnement du processeur secondaire AP 14 comprend en outre tous les éléments usuellement présents dans un système comprenant une unité de contrôle et ses périphériques, tels que, un circuit d'alimentation, un circuit de supervision d'alimentation, un ou plusieurs circuits d'horloge, un circuit de remise à zéro, des ports d'entrées-sorties, des entrées d'interruptions, des drivers de bus, cette liste étant non exhaustive.

Selon un mode de réalisation, chacun des processeurs MP 13 et AP 14 peut être implémenté sous forme d'un composant ou module unique ou encore sous la forme d'une pluralité de composants ou modules coopérant entre eux.

L'invention ne se limite pas aux seuls modes de réalisation et exemples décrits mais plus généralement à tout type de dispositif électronique comprenant deux circuiteries électroniques dont l'une, circuiterie électronique principale, peut être désactivée sous contrôle de l'autre, deuxième circuiterie électronique, et dont l'autre, deuxième circuiterie électronique, comprend un processeur secondaire ou auxiliaire doté d'une interface de communication sans fil à basse consommation associée d'une part à une mémoire secondaire d'informations et de paramètres de configuration, et d'autre part à une mémoire dédiée à la mémorisation d'une pile de communication réseau de l'interface de communication, notamment pour la mémorisation d'informations de configuration d'un niveau applicatif lorsque la première circuiterie électronique est désactivée et que le dispositif électronique opère en veille profonde.

## Revendications

1. Dispositif électronique (GW 1) comprenant au moins une première circuiterie électronique (MC 11) et une deuxième circuiterie électronique (SC 12), la première circuiterie électronique (MC 11) comprenant un premier processeur (MP 13), dit « processeur principal » relié à une première mémoire (MM 15) dite « mémoire principale », et la deuxième circuiterie électronique (SC 12) comprenant un deuxième processeur (AP 14), dit « processeur secondaire », relié à une deuxième mémoire (AM 16) dite « mémoire secondaire », ledit processeur secondaire (AP 14) comprenant une interface de communication sans fil (RI 145), dite « interface radio basse consommation» et ledit processeur secondaire (AP 14) étant configuré pour communiquer via un lien de communication (132b) avec ledit processeur principal (MP 13) lorsque ladite première circuiterie électronique (MC 11) est alimentée en énergie électrique, ladite première circuiterie électronique (MC 11) étant configurée pour être alimentée conditionnellement en énergie électrique via un circuit d'interface d'alimentation électrique (PI 19) contrôlé par ledit processeur secondaire (AP 14) et ladite deuxième circuiterie électronique (SC 12) étant continuellement alimentée en énergie électrique lorsque le dispositif électrique (1) est connecté à une source principale d'alimentation électrique (3),
ledit dispositif électronique (GW 1) étant configuré tel que :
- ladite interface radio basse consommation (RI 145) est apte à coopérer avec une mémoire de données de configuration (RIM 145m) accessible en écriture par ledit processeur principal (MP 13) via un lien de communication (132b) entre ledit processeur principal (MP 13) et ledit processeur secondaire (AP 14),
- ladite interface radio basse consommation (RI 145) est apte à opérer des communications bidirectionnelles de façon autonome avec au moins un dispositif distant (S), selon une configuration de communication déterminée à partir d'informations enregistrées dans ladite mémoire de données de configuration (RIM 145m), lorsque ladite première circuiterie (MC 11) n'est pas alimentée en énergie électrique, et,
- ledit processeur secondaire est apte à mémoriser dans ladite mémoire secondaire (AM 16) des deuxièmes informations de configuration dudit dispositif électronique (GW 1) lorsque ladite première circuiterie (MC 11) n'est pas alimentée en énergie électrique, ladite deuxième circuiterie (SC12) étant configurable pour exécuter les étapes :
- obtenir, depuis ledit processeur principal (MP 13), dans ladite mémoire de données de configuration (RIM 145m), des premières informations de configuration représentatives d'un mode de fonctionnement à opérer de ladite interface radio basse consommation,
- obtenir des deuxièmes informations, représentatives d'une configuration matérielle et/ou logicielle courante dudit dispositif électronique (GW1),
- opérer un premier contrôle dudit circuit d'interface d'alimentation électrique (PI 19) pour désactiver l'alimentation de ladite première circuiterie électronique (MC 11), de sorte à configurer ledit dispositif électronique (GW 1) en veille profonde,
- mémoriser dans ladite mémoire secondaire (AM 16) des deuxièmes informations de configuration du dispositif électronique GW (1) obtenues via des communications sans fil avec un dispositif distant grâce à ladite interface radio basse consommation (RI 145), selon un mode de fonctionnement de ladite interface radio basse consommation (RI 145) déterminé par tout ou partie desdites premières informations de configuration obtenues, lorsque ledit dispositif électronique (GW 1) est configuré en veille profonde, lesdites deuxièmes informations de configuration étant représentatives d'une configuration matérielle et/ou logicielle dudit dispositif électronique (GW1) différente de la configuration matérielle et/ou logicielle courante dudit dispositif électronique (GW1), et,
- lors de communications opérées en veille profonde, opérer une détection d'un évènement préalablement défini comme étant une condition de sortie de ladite veille profonde, l'évènement préalablement défini étant un changement d'état dudit dispositif distant, puis,
- opérer un deuxième contrôle dudit circuit d'interface d'alimentation (PI 19) pour activer l'alimentation électrique de ladite première circuiterie électronique (MC 11), de sorte à configurer ledit dispositif électronique (GW 1) en mode actif, puis transmettre tout ou partie desdites deuxièmes informations de configuration audit processeur principal (MP 13).

2. Dispositif électronique (GW 1) selon la revendication 1, dans lequel ladite interface radio basse consommation (RI 145) est apte à opérer des communications selon un standard et/ou des protocoles de communications à courte portée.

3. Dispositif électronique (GW 1) selon l'une des revendications 1 et 2, dans lequel ladite interface radio basse consommation (RI 145) est apte à opérer des communications selon un standard et/ou des protocoles de communications prédéterminés parmi : Bluetooth, Zigbee, Thread.

4. Dispositif électronique (GW 1) selon l'une des revendications 1 à 3, dans lequel ladite mémoire secondaire (AM 16) comprend une zone mémoire de type mémoire non volatile.

5. Procédé de configuration d'un dispositif électronique (GW 1), le dispositif électronique comprenant au moins une première circuiterie électronique (MC 11) et une deuxième circuiterie électronique (SC 12), la première circuiterie électronique (MC 11) comprenant un premier processeur (MP 13), dit « processeur principal » relié à une première mémoire (MM 15) dite « mémoire principale », et la deuxième circuiterie électronique (SC 12) comprenant un deuxième processeur (AP 14), dit « processeur secondaire », relié à une deuxième mémoire (AM 16) dite « mémoire secondaire », ledit processeur secondaire (AP 14) comprenant une interface de communication sans fil (RI 145), dite « interface radio basse consommation» et ledit processeur secondaire (AP 14) étant configuré pour communiquer via un lien de communication (132b) avec ledit processeur principal (MP 13) lorsque ladite première circuiterie électronique (MC 11) est alimentée en énergie électrique, ladite première circuiterie électronique (MC 11) étant configurée pour être alimentée conditionnellement en énergie électrique via un circuit d'interface d'alimentation électrique (PI 19) contrôlé par ledit processeur secondaire (AP 14) et ladite deuxième circuiterie électronique (SC 12) étant continuellement alimentée en énergie électrique lorsque le dispositif électrique (1) est connecté à une source principale d'alimentation électrique (3),
le procédé étant exécuté dans ladite deuxième circuiterie électronique (SC 12) et comprenant :
- obtenir (S1), depuis ledit processeur principal (MP 13), dans ladite mémoire de données de configuration (RIM 145m), des premières informations de configuration représentatives d'un mode de fonctionnement à opérer de ladite interface radio basse consommation,
- obtenir (S1b) des deuxièmes informations, représentatives d'une configuration matérielle et/ou logicielle courante dudit dispositif électronique (GW1),
- opérer un premier contrôle (S2) dudit module d'interface d'alimentation électrique (PI 19) pour désactiver l'alimentation de ladite première circuiterie électronique (MC 11), de sorte à configurer ledit dispositif électronique (GW 1) en veille profonde,
- mémoriser (S3) dans ladite mémoire secondaire (AM 16) des deuxièmes informations de configuration du dispositif électronique GW (1) obtenues via des communications sans fil avec un dispositif distant grâce à ladite interface radio basse consommation (RI 145), selon un mode de fonctionnement de ladite interface radio basse consommation (RI 145) déterminé par tout ou partie desdites premières informations de configuration obtenues, lorsque ledit dispositif électronique (GW 1) est configuré en veille profonde, lesdites deuxièmes informations de configuration étant représentatives d'une configuration matérielle et/ou logicielle dudit dispositif électronique (GW1) différente de la configuration matérielle et/ou logicielle courante dudit dispositif électronique (GW1), et,
- lors de communications opérées en veille profonde, opérer une détection d'un évènement préalablement défini comme étant une condition de sortie de ladite veille profonde, l'évènement préalablement défini étant un changement d'état dudit dispositif distant, puis,
- opérer un deuxième contrôle (S4) dudit module d'interface d'alimentation (PI 19) pour activer l'alimentation électrique de ladite première circuiterie électronique (MC 11), de sorte à configurer ledit dispositif électronique (GW 1) en mode actif, puis transmettre tout ou partie desdites deuxièmes informations de configuration audit processeur principal (MP 13).

6. Procédé de configuration selon la revendication 5, selon lequel ladite mémoire de données de configuration (RIM 145m) est dédiée au fonctionnement d'un module de contrôle de ladite interface radio basse consommation (RI 145) et est configurée pour comprendre des informations à utiliser en référence à une couche logicielle de niveau applicatif dudit module de contrôle de ladite interface radio basse consommation (RI 145).

7. Procédé de configuration selon l'une des revendications 5 à 6, selon lequel ledit mode de communication à opérer de ladite interface radio est défini selon un standard de communication parmi Bluetooth, Zigbee, Thread.

8. Procédé de configuration selon l'une des revendications 5 à 7 comprenant en outre, lors de communications opérées en ladite veille profonde, une détection d'un évènement préalablement défini comme étant une condition de sortie de ladite veille profonde, puis un contrôle, par ledit processeur secondaire (AP 14), dudit module d'interface d'alimentation électrique (PI 19) pour activer l'alimentation de ladite première circuiterie électronique (MC 11), de sorte à configurer ledit dispositif électronique (GW 1) en mode actif.

9. Procédé de configuration selon la revendication 8, selon lequel ledit évènement préalablement défini est la présence d'un dispositif tiers (S) à portée électromagnétique de ladite interface de communication basse tension (RI 145).

10. Produit programme d'ordinateur comprenant des instructions de codes de programme pour exécuter des étapes du procédé de configuration selon l'une des revendications 5 à 9, lorsque ce programme est exécuté par un processeur (AP 14) d'un dispositif électronique (GW 1).

11. Dispositif de stockage comprenant un produit programme d'ordinateur selon la revendication 10.
